# EUROPEAN PATENT APPLICATION

(11) **EP 2 311 326 A1**
(43) Date of publication of application: **20.04.2011**
(21) Application number: 09794231.2
(22) Date of filing: 16.03.2009
(51) Int. Cl.: A23L 1/22, A23C 9/154, A23D 7/00, A23L 1/39, C12J 1/00

(54) **TASTE-IMPROVING AGENT FOR FOODS AND DRINKS**

(30) Priority: 10.07.2008 JP 2008179761
(71) Applicant: J-Oil Mills, Inc., Tokyo 104-0044 (JP)
(72) Inventor: INO, Tomokazu, Tokyo 104-0044 (JP); FUJIWARA, Hidenori, Tokyo 104-0044 (JP); YAMADA, Yuzo, Tokyo 104-0044 (JP); SHIRAMASA, Hiroshi, Tokyo 104-0044 (JP)
(74) Representative: Woods, Geoffrey Corlett
(86) International application number: PCT/JP2009/055017
(87) International publication number: WO 2010/004784

(57) **Abstract**

Provided are a taste-improving agent for foods and drinks, a method of improving the taste of a food or a drink, and a food or a drink having an improved taste. A taste-improving agent for foods and drinks which comprises a long-chain highly unsaturated fatty acid and/or an ester thereof and a sterol and/or a sterol ester; a method of improving the taste of a food or a drink which comprises adding the taste-improving component as described above; a food or a drink the taste of which has been improved by the above method; and use of a combination of a long-chain highly unsaturated fatty acid and/or an ester thereof with a sterol and/or a sterol ester as a taste-improving agent for foods and drinks.

## Description

### Technical Field

The present invention relates to a taste-improving agent comprising a long-chain highly unsaturated fatty acid and/or an ester thereof, and a sterol and/or a sterol ester, a method for improving taste by the addition of said taste-improving agent and foods and drinks whose taste has been improved by said method.

### Technical Background

Arachidonic acid (cis-5,8,11,14-eicosatetraenoic acid) belongs to long-chain highly unsaturated (polyunsaturated) fatty acids, and Exampleists in a phospholipid derived from animal organs or tissues. This fatty acid is an essential one, and is very important as a precursor for the synthesis of prostaglandin, thromboxane, leukotriene, etc

Attempts have been made to add the long-chain highly unsaturated fatty acids such as arachidonic acid and esters thereof for enrichment of nutrition and provision of various physiological functions in view of the above remarkable functions of arachidonic acid.

An enriched composition described in Japanese Patent Application laid open Hei 10 (1998)-99048 comprises arachidonic acid in an amount of 0.1∼10 % by weight as one of the components added for realizing a composition similar to that of mother's milk.
Japanese Patent Application laid open Hei 11 (1999)-89513 discloses a synthetic fat and oil composition similar to human milk fat and oil, in which n-6 long-chain highly unsaturated fatty acid such as arachidonic acid, is used as one of the constituting fatty acids of triglyceride.
Furthermore, Japanese Patent Application laid open Hei 10 (1998) -70992 and Japanese Patent Application laid open Hei 10 (1998) -191886 disclose edible oil derived from microorganism, which has a lot of arachidonic acid in a form of triglyceride. Its preferred application includes modified milk for a premature baby or an infant, food and drink for infant, and food and drink for a pregnant woman.

Japanese Patent Application laid open Hei 9 (1997) -13075 discloses fat and oil consisting of glyceride comprising ong-chain highly unsaturated fatty acids such as arachidonic acid, and having a function of reducing the concentration of fatty and oil in blood. On the other hand, Japanese Patent Application laid open Hei 9 (1997) -13076 discloses fat and oil with the same composition as the above one, having a function of inhibiting platelet aggregation.

A seasoning is listed as an Example of application of highly unsaturated fatty acids in the field of food. The Japanese Patent Application laid open 2001-78702 discloses a seasoning having enriched mildness, after taste, and UMAMI, which is prepared by mixing fat and oil with extract into an oil-in-water-type emulsion. The Japanese Patent No.3220155 discloses a flavoring composition which is prepared by oxidization of fatty acids except milk fat.

US Patent No.3689289 disclosed a method for the production of artificial chicken flavor comprising reacting a reduced sugar, an amino acid and arachidonic acid or its methyl ester with heating under particular conditions. International Publication WO2003/051139 pamphlet describes that use of arachidonic acid in the form of its ester with glycerine in said method will provide purified chicken flavor with thermal resistance and stability. These effects are all due to artificial chicken-like flavor generated from a heated product of the three components of the sugar, amino acid and arachidonic acid.

Furthermore, Japanese Patent Application laid open 2002 -95439 discloses a seasoning comprising a long-chain highly unsaturated fatty acid glyceride. The purpose of this invention is to increase oxidation-stability of the long-chain highly unsaturated fatty acid glyceride that is liable to deterioration by oxidation. For that purpose, the long-chain highly unsaturated fatty acid glyceride is added to fermented and processed soybean food, to fermented and processed fishery products, or to a seasoning comprising tomato ingredient as a main component.

Japanese Patents No.3729272 and No.3962068 disclose a body-taste ("kokumi") improver comprising n-6 long-chain highly unsaturated fatty acid and/or its ester. They have demonstrated that the body taste of food can be improved and taste of food can be elicited by adding the long-chain highly unsaturated fatty acid such as arachidonic acid and/or its ester alone to the food, or by subjecting the food to oxidation treatment such as heat cooking with vegetable fat and oil composition comprising said long-chain highly unsaturated fatty acid. WO2005/004634 discloses that the body taste of food can be improved by the addition of a decomposed product of the long-chain highly unsaturated fatty acid and/or its ester, and extract of the decomposed product to the food. WO2005/046653 discloses that addition of the long-chain highly unsaturated fatty acid and/or its ester to food can show a variety of their functions such as improving taste or flavor as well as improving the body taste of the food.

It is known that fat and oil comprising sterol and/or sterol ester as phytosterol has an advantage of reducing cholesterol in blood and liver (Japanese Patent Application laid open 2002 -112723). Sterol and/or sterol ester are also generally used as materials for the production of pharmaceuticals and an emulsifying agent or emulsion-stabilizer in cosmetics and foods.

Thus, the prior arts described above show various functions and body taste-improving effects of the long-chain highly unsaturated fatty acid and/or the ester thereof, and sterol and/or sterol ester. However, they do not disclose or suggest use of a combination of the long-chain highly unsaturated fatty acid such as arachidonic acid and/or the ester thereof, and the sterol and/or sterol ester for the purpose of improving taste. They do not have any description, either, which suggests the possibility of a synergistic effect of improving taste due to said combination.

Patent Document 1: Japanese Patent Application laid open Hei 10 (1998) -99048
Patent Document 2: Japanese Patent Application laid open Hei 11 (1999) -89513
Patent Document 3: Japanese Patent Application laid open Hei 10 (1998) -70992
Patent Document 4: Japanese Patent Application laid open Hei 10 (1998) -191886
Patent Document 5: Japanese Patent Application laid open Hei 9 (1997) -13075
Patent Document 6: Japanese Patent Application laid open Hei 9 (1997) -13076
Patent Document 7: Japanese Patent Application laid open 2001 -78702
Patent Document 8: Japanese Patent No.3220155
Patent Document 9: US Patent No.3689289
Patent Document 10: WO2003/051139
Patent Document 11: Japanese Patent Application laid open 2002-95439
Patent Document 12: Japanese Patent No.3729272
Patent Document 13: Japanese Patent No.3962068
Patent Document 14: WO2005/004634 pamphlet
Patent Document 15: WO2005/046653 pamphlet
Patent Document 16: WO2005/046354 pamphlet
Patent Document 17: Japanese Patent Application laid open 2002 - 112723

### Disclosure of the Invention

### Problem to be solved by the Invention

The purpose of the present invention is to provide a taste-improving agent for foods and drinks, a method for improving the taste of foods and drinks, and foods and drinks having an improved taste.

The present invention relates to a taste-improving agent comprising a long-chain highly unsaturated fatty acid and/or an ester thereof and a sterol and/or a sterol ester, a method for improving the taste of foods and drinks by the addition of said taste-improving agent, foods and drinks whose taste has been improved by said method, and use of the combination of the long-chain highly unsaturated fatty acid and/or an ester thereof, and the sterol and/or sterol ester as a taste-improving agent.

### Advantages of the Invention

According to the present invention, synergistic effects of improving taste are obtained by adding two components, that is, a long-chain highly unsaturated fatty acid and/or an ester thereof, and a sterol and/or a sterol ester, to foods and drinks. As a result, the present invention enables to provide foods and drinks having an improved taste with a lower amount of taste ingredients than in an usual case, or foods and drinks having an improved taste with the same amount of taste ingredients as that in an usual case, more specifically foods and drinks having an enhanced body taste, salty taste, sweet taste, acid taste and the like.

### Best Mode for Carrying Out the Invention

The terms "to improve taste" in the present specification mean to improve or enhance each taste that foods and drinks originally have, more specifically, to improve or enhance each taste of the foods and drinks such as body taste, salty taste, sweet taste, and acid taste depending on their original taste and flavor. Thus, the two components comprised as an active ingredient in the taste-improving agent according to the present invention, the long-chain highly unsaturated fatty acid and/or the ester thereof, and the sterol and/or the sterol ester, will function as an enhancing ingredient of each taste. Thus, the taste-improving agent according to the present invention will act or function as a "body taste enhancer", a "salty taste enhancer", a "sweet taste enhancer" and an "acid taste enhancer" depending on a kind, ingredients and the like of the foods and drinks to which the above taste-improving agent is added.

The "long-chain highly unsaturated fatty acid" in the present specification means a fatty acid having 20 or more of carbon atoms and 3 or more of double bonds in the case of n-3 long-chain highly unsaturated fatty acids, and a fatty acid having 18 or more of carbon atoms and 3 or more of double bonds in the case of n-6 long-chain highly unsaturated fatty acids. A long-chain highly unsaturated fatty acid having 20∼24 carbon atoms and 4∼6 double bonds is preferred in both cases. Examples of the n-6 long-chain highly unsaturated fatty acids include arachidonic acid (AA) and docosatetraenoic acid (DTA), arachidonic acid being preferable. Examples of the n-3 long-chain highly unsaturated fatty acids include docosahExampleaenoic acid (DHA) and eicosapentaenoic acid (EPA).

There is no limitation on an origin of the long-chain highly unsaturated fatty acid such as arachidonic acid and its ester used in the present invention. Those skilled in the art may optionally use those derived from various animals and vegetables, microorganisms and algae that are commercially available.
For Example, Japanese Patent Applications laid open Hei 10 (1998) -70992 and Hei 10 (1998) -191886 disclose edible fat and oil derived from bacteria, which comprises a lot of arachidonic acid in a form of triglyceride. The arachidonic acid may be therefore obtained from said edible fat and oil.
It is also possible to mix and use together two or more kinds of the long-chain highly unsaturated fatty acids, or the long-chain highly unsaturated fatty acids that have different origins but belong to the same kind.

There is no limitation on structure and preparation of the ester of the long-chain highly unsaturated fatty acid, and monohydric and polyhydric alcohols may be used as alcohol that constitutes the above ester. Glycerol is one of the preferred Examples of the polyhydric alcohols in view of safety and cost. The glycerol will constitute tri-glyceride, di-glyceride or mono-glyceride. Other fatty acids besides the long-chain highly unsaturated fatty acid may be contained as fatty acids that constitute the ester of the present invention. Furthermore, a ratio between a free acid and its ester may be optionally determined.

There is no limitation on a method for oxidization treatment of the n-3 long-chain highly unsaturated fatty acid and/or the ester thereof, which, for Example, includes heating treatment. There is no limitation on a method for heating treatment, either. It is not necessary to carry out the oxidization treatment in the presence of an antioxidant, or in a closed system. The heating may therefore be normally carried out at 40°C ∼200°C for 0.1∼240 hours, preferably at 80°C ∼180°C for 0.5∼72 hours.

Although it is not necessary to subject the n-6 long-chain highly unsaturated fatty acid and/or the ester thereof to the oxidization treatment in order to effect the advantage of the taste-improving agent with the sterol and/or sterol ester, said advantages shall be further increased by the oxidization treatment. The oxidization treatment may also be done by heating the food and drinks which contain the taste-improving agent comprising long-chain highly unsaturated fatty acid and/or the ester thereof, and the sterol and/or sterol ester according to the present invention.

The term "sterol" is a generic designation of compounds having structure similar to cholesterol or its saturated-type compound, cholestanol, which are widely distributed among animals, plants, microorganisms and algae. The sterol and/or sterol ester may be derived from any sources known for those skilled in the art. Particularly, various kinds of phytosterol and any mixture thereof may be used as such, which are obtained from a lipid-soluble fraction of plants such as soybean, rape seed, rice bran and rice germ by means of any method known for those skilled in the art. The above mixture may optionally comprise other ingredients than the phytosterol or phytostanol, such as fatty acids, fatty acid esters, tocopherol, phospholipid and the like. Any combination of one or more kinds of the compounds selected from various phytosterol and phytostanol may be used, which are comprised as a constituent in the above mixture. Representative Examples of the constituent include β-sitosterol, β-sitostanol, stigmasterol, stigmastanol, campesterol, campestanol, brassicasterol and brassicastanol. In addition to natural phytostanols, the phytostanols may be prepared by hydrogenating phytosterols. A ratio between a free sterol and its ester may be optionally determined.

There is no limitation on the content of the long-chain highly unsaturated fatty acid and/or the ester thereof, and the sterol and/or the sterol ester, which are the active ingredient in the taste-improving agent according to the present invention. Said content may be optionally determined and adjusted depending on the kind of foods and drinks, the purpose of the addition of the present taste-improving agent. A ratio of the contents of the two active ingredients is not limited any way.

The taste-improving agent of the present invention may additionally contain other optional ingredients known to those skilled in the art, such as an emulsifier; tocopherols; phospholipids and other fatty acids; triglycerides, diglycerides and monoglycerides containing said other fatty acids as long as they will not deteriorate the advantages of the active ingredients of the present invention. Any known oil such as corn oil may be used as base.

There is no limitation on the kinds of foods and drinks, whose taste can be improved by the addition of the taste-improving agent according to the present invention. Examples of said foods and drinks are described in the present specification. An amount of the taste-improving agent to be added to the foods and drinks may be optionally selected and adjusted depending on the kind of the foods and drinks and the purpose of the addition of the agent. The taste-improving agent of the present invention may be optionally added to the foods and drinks at any time such as cooking time and eating time.

When the taste-improving agent of the present invention serves and functions as the body taste enhancer, the total foods and drink may comprise an amount of 0.1∼10,000 ppm, preferably of 1.0∼1,000 ppm, more preferably of 1.0 ppm∼500 ppm of the long-chain highly unsaturated fatty acid and/or the ester thereof; and an amount of 0.1∼10,000 ppm, preferably of 0.1 ppm∼500 ppm of the sterol and/or the sterol ester.

When the taste-improving agent of the present invention serves and functions as the salty taste enhancer, the total foods and drink may comprise an amount of 0.1∼10,000 ppm, preferably of 1.0∼1,000 ppm, more preferably of 1.0 ppm∼500 ppm of the long-chain highly unsaturated fatty acid and/or the ester thereof; and an amount of 0.1∼10,000 ppm, preferably of 0.1 ppm∼500 ppm of the sterol and/or the sterol ester.

When the taste-improving agent of the present invention serves and functions as the sweet taste enhancer, the total foods and drink may comprise an amount of 0.1∼10,000 ppm, preferably of 1.0∼1,000 ppm, more preferably of 1.0 ppm∼500 ppm of the long-chain highly unsaturated fatty acid and/or the ester thereof; and an amount of 0.1∼10,000 ppm, preferably of 0.1 ppm∼500 ppm of the sterol and/or the sterol ester.

When the taste-improving agent of the present invention serves and functions as the acid taste enhancer, the total foods and drink may comprise an amount of 0.1∼10,000 ppm, preferably of 1.0∼1,000 ppm, more preferably of 1.0 ppm∼500 ppm of the long-chain highly unsaturated fatty acid and/or the ester thereof; and an amount of 0.1∼10,000 ppm, preferably of 0.1 ppm∼500 ppm of the sterol and/or the sterol ester.

There is no limitation on a salty taste ingredient contained in the foods and drinks, including natural salt or non-natural salt, no limitation on the concentration of the salty taste ingredient, either, as long as it is suitable for the foods and drinks.

There is no limitation on a sweet taste ingredient contained in the foods and drinks as long as it is edible one, including sugar glucose, fructose, lactose, stevia and aspartame (artificial sweetener), or no limitation on the concentration of the acid taste ingredient, either, as long as it is suitable for the foods and drinks.

There is no limitation on an acid taste ingredient contained in the foods and drinks, including rice vinegar, cereal vinegar, black vinegar (brown rice vinegar) and apple vinegar, or no limitation on the concentration of the acid taste ingredient, either, as long as it is suitable for the foods and drinks.

The present invention will be Exampleplained in more detail with reference to the following Examples, which should not be construed as limiting a technical scope of the present invention.

### Example

Symbols used for evaluation in the following Examples mean as follows:
"-" : no effect; "+": the more its number is, the higher effect it shows The following materials are used in the following Examples:
   - Corn oil: manufactured by J-Oil Mills, Inc.
   - Arachidonic acid triglyceride (AATG): "SUNTGA40S" manufactured by Suntory Ltd., arachidonic acid (AA) derived from microorganism, a purity of 40-45 %
   - Diluted AATG: AATG diluted with corn oil to its final concentration of 0.5 % by weight
   - Diluted sterol ester: phytosterol manufactured by Yashiro Co.,Ltd. having sterol ester content of 92 % (a free sterol concentration of 56 %) diluted with corn oil to its final concentration of 0.5 % by weight
   - Diluted and oxidized AA: AATG oxidized at 120 °C for 3 hours and diluted with corn oil to its final concentration of 0.5 % by weight

### Phytosterol manufactured by Yashiro Co.,Ltd.

- Starting material:
   Mixture of the scum of soybean and rapeseed (the ratio of 86.14:13.86)
- A total sterol content of 13 % by weight (the total sterol content of soy bean scum and rapeseed scum are 12.1% and 18.5%, respectively).
The starting material is subjected to ester exchange reaction with enzyme to give sterol ester, followed by molecular distillation.

Sterol ester content of 92.1% (a free sterol concentration of about 56.4 %) Composition of sterol esters, and free sterols in parentheses manufactured by Yashiro Co.,Ltd:

| | |
|---|---|
| Brassicasterol | 5.3 % (3.0%); |
| Campesterol | 26 % (14.6 %); |
| Stigmasterol | 18.9 % (10.7 %); and |
| β-Sitosterol | 49.2 % (27.7 %). |

### [Experiment1]

Evaluation with sugar solution (Effect of the addition of AATG and sterol ester on a sweetener)

| | |
|---|---|
| Comparative Example 1: | Corn oil only (control); |
| Comparative Example 2: | Diluted sterol ester; |
| Comparative Example 3: | Diluted AATG; and |
| Example 1: | Diluted sterol ester + Diluted AATG. |

As shown in Table 1, each of Comparative Examples 1∼3 and Example 1, water and sugar were weighed and mixed. The resulting mixture was boiled in a pan and kept at 60 °C, for a sensory evaluation by five taste-panelists. The results are shown in Table 2.

**[Table 1]**

| | | Comparative Example 1 | Comparative Example 2 | Comparative Example 3 | Example 1 |
|---|---|---|---|---|---|
| Water | | 179.5g | 179.5g | 179.5g | 179g |
| Sugar | | 20.0g | 20.0g | 20.0g | 20.0g |
| Oil | Corn oil | 0.5g | | | |
| | Diluted AATG | | | 0.5g | 0.5g |
| Diluted sterol ester | | | 0.5g | | 0.5g |

**[Table 2]**

| | Comparative Example 1 | Comparative Example 2 | Comparative Example 3 | Example 2 |
|---|---|---|---|---|
| Strength of sweet taste | + | + | ++ | +++++ |

While no sweet taste-enhancing effect was recognized in Comparative Example 2 wherein the sterol ester was added, a sweet taste-enhancing effect was recognized in Comparative Example 3 wherein the ATGG was added. On the other hand, the sweet taste-enhancing effect was more increased in Example 1 than in Comparative Examples 2 and 3, showing a synergistic effect.

### [Experiment 2]

Evaluation with chocolate spread (Effect of the addition of AATG and sterol ester)

| | |
|---|---|
| Comparative Example 4: | Corn oil only (control); |
| Comparative Example 5: | Diluted sterol ester; |
| Comparative Example 6: | Diluted AATG; and |
| Example 2: | Diluted sterol ester + Diluted AATG. |

Chocolate spread: Chocolate cream manufactured by Meiji Dairies Corporation

As shown in Table 3, each of Comparative Examples 4∼6 and Example 2, and chocolate spread were weighed and mixed with each other. The resulting mixture was subjected to a sensory evaluation by five taste-panelists. The results are shown in Table 4.

**[Table 3]**

| | | Comparative Example 4 | Comparative Example . | Comparative Example . | Example 2 |
|---|---|---|---|---|---|
| Chocolate spread | | 20.0g | 20.0g | 20.0g | 20.0g |
| Oil | Corn oil | 0.5g | | | |
| | Diluted AATG | | | 0.5g | 0.5g |
| Diluted sterol ester | | | 0.5g | | 0.5g |

**[Table 4]**

| | Comparative Example 4 | Comparative Example 5 | Comparative Example 6 | Example 2 |
|---|---|---|---|---|
| Strength of | + | + | ++ | +++++ |
| sweet taste | | | | |

While no sweet taste-enhancing effect was recognized in Comparative Example 5 wherein the sterol ester was added, a sweet taste-enhancing effect was recognized in Comparative Example 6 wherein the ATGG was added. On the other hand, the sweet taste-enhancing effect was more increased in Example 2 than in Comparative Examples 5 and 6, showing a synergistic effect.

### [Experiment 3]

Evaluation with condensed milk (Effect of the addition of AATG and sterol ester) Comparative Example 7: Corn oil only (control); Comparative Example 8: Diluted sterol ester; Comparative Example 9: Diluted AATG; and Example 3: Diluted sterol ester + Diluted AATG. Condensed milk: Snow Brand Hokkaido Condensed Milk manufactured by Snow Brand Milk Products Co.,Ltd.

As shown in Table 5, each of Comparative Examples 7∼9 and Example 3, and condensed milk were weighed and mixed with each other. The resulting mixture was subjected to a sensory evaluation by five taste-panelists. The results are shown in Table 6.

**[Table 5]**

| | | Comparative Example 7 | Comparative Example 8 | Comparative Example 9 | Example 3 |
|---|---|---|---|---|---|
| Condensed milk | | 20.0g | 20.0g | 20.0g | 20.0g |
| Oil | Corn oil | 0.5g | | | |
| | Diluted AATG | | | 0.5g | 0.5g |
| Diluted sterol ester | | | 0.5g | | 0.5g |

**[Table 6]**

| | Comparatives | Comparative | Comparative | Example 3 |
|---|---|---|---|---|
| | Example 7 | Example 8 | Example 9 | |
| Strength of sweet taste | + | + | ++ | +++++ |

While no sweet taste-enhancing effect was recognized in Comparative Example 8 wherein the sterol ester was added, a sweet taste-enhancing effect was recognized in Comparative Example 9 wherein the ATGG was added. On the other hand, the sweet taste-enhancing effect was more increased in Example 3 than in Comparative Examples 8 and 9, showing a synergistic effect.

### [Experiment 4]

Evaluation with corn cream soup (Effect of the addition of AATG and sterol ester)

| | |
|---|---|
| Comparative Example 10: | Corn oil only (control); |
| Comparative Example 11: | Diluted sterol ester; |
| Comparative Example 12: | Diluted AATG; and |
| Example 4: | Diluted sterol ester + Diluted AATG. |
| Corn cream soup powder: | "Knorr cup soup, corn cream " manufactured by |
| Ajinomoto CO.,Inc. | |

As shown in Table 7, each of Comparative Examples 10∼12 and Example 4, and soup powder were weighed and mixed with boiling water. The resulting mixture was subjected to a sensory evaluation by five taste-panelists. The results are shown in Table 8.

**[Table 7]**

| | | Comparative Example 10 | Comparative Example 11 | Comparative Example 12 | Example 4 |
|---|---|---|---|---|---|
| Soup powder | | 19.6g | 19.6g | 19.6g | 19.6g |
| Oil | Corn oil | 0.5g | | | |
| | Diluted AATG | | | 0.5g | 0.5g |
| Diluted sterol ester | | | 0.5g | | 0.5g |
| Boiling water | | 150g | 150g | 150g | 150g |

**[Table 8]**

| | Comparative Example 10 | Comparative Example 11 | Comparative Example 12 | Example4 |
|---|---|---|---|---|
| Strength of sweet taste | + | + | ++ | +++++ |

While no sweet taste-enhancing effect was recognized in Comparative Example 11 wherein the sterol ester was added, a sweet taste-enhancing effect was recognized in Comparative Example 12 wherein the ATGG was added. On the other hand, the sweet taste-enhancing effect was more increased in Example 4 than in Comparative Examples 11 and 12, showing a synergistic effect.

### [Experiment 5]

Evaluation with salt solution (Effect of the addition of AATG and sterol ester)

| | |
|---|---|
| Comparative Example 13: | Corn oil only (control); |
| Comparative Example 14: | Diluted sterol ester; |
| Comparative Example 15: | Diluted Riceterol ester; |
| Comparative Example 16: | Diluted AATG; and |
| Example 5: | Diluted sterol ester + Diluted AATG. |
| Example 6: | Diluted Riceterol ester + Diluted AATG. |
| Diluted Riceterol: | "Riceterol^{™}" ester diluted with corn oil to a final |
| ester concentration of 0.5 % by weight | |

### "Riceterol^{™}" manufactured by TSUNO CO., LTD.

- A mixture of esters of phytosterol and triterpene alcohol with fatty acids, obtained by rice bran and rice germ
- Sterol ester content of 82.3% (a free sterol concentration of about 50.8 %)
- Composition of the sterol esters, and free sterols in parentheses in Table 9:

**[Table 9]**

| | |
|---|---|
| Brassica | 0.1 % |
| Campe | 9.1% |
| Stigma | 2.4% |
| 7-Ergo | 0.5% |
| Sito | 9.5% |
| Isofuco | 0.9% |
| 7-Stigma | 0.2% |
| Cycloartenol | 10.3% |
| 2,4 Methylene | 15.6% |
| Cyclobranol | 2.1 % |
| In a narrow sense | 22.7% |
| Triterpene alcohol | 28.1 % |
| Total Amount | 50.8% |

As shown in Table 10, each of Comparative Examples 13∼16 and Examples 5 and 6, water and common salt were weighed and mixed. The resulting mixture was boiled in a pan and kept at 60 °C for a sensory evaluation by five taste-panelists. The results are shown in Table 11.

**[Table 10]**

| | | Comparative Examp le13 | Comparative Examp le14 | Comparative Examp le. 15 | Comparative Examp le16 | Example. 5 | Example. 6 |
|---|---|---|---|---|---|---|---|
| Water | | 197.9g | 197.9g | 197.9g | 197.9g | 197.4g | 197.4g |
| Salt | | 1.6g | 1.6g | 1.6g | 1.6g | 1.6g | 1.6g |
| Oil | Corn oil | 0.5g | | | | | |
| | Diluted AATG | | | | 0.5g | 0.5g | 0.5g |
| Diluted sterol ester | | | 0.5g | | | 0.5g | |
| Diluted Riceterol ester | | | | 0.5g | | | 0.5g |

**[Table 11]**

| | Comparative Example 13 | Comparative Example 14 | Comparative Example 15 | Comparative Example 16 | Example 5 | Example 6 |
|---|---|---|---|---|---|---|
| Strength of salty | + | +.++ | +.++ | ++ | +++++ | +++++ |
| taste | | | | | | |
| Effect of inhibiting the harshness due to salty taste | - | - | - | ++ | ++ | ++ |

Although a salty taste-enhancing effect was recognized in Comparative Examples 14 and 15 wherein the sterol ester and Riceterol were added, respectively, harshness due to salty taste was observed, too. In other words, there was no difference in texture of the taste between the control and these Comparative Examples. An effect of inhibiting the harshness (taste-improving and taste-enhancing effects) was recognized in Comparative Example 16 wherein the ATGG was added in addition to the salty taste-enhancing effect. On the other hand, the salty taste was more increased in Examples 5 and 6 than in Comparative Examples 14, 15 and 16, showing a synergistic effect.

### [Experiment 6]

Evaluation with chicken stock (Effect of the addition of AATG and sterol ester)

| | |
|---|---|
| Comparative Example 17: | Corn oil only (control); |
| Comparative Example 18: | Diluted sterol ester; |
| Comparative Example 19: | Diluted AATG; and |
| Example 7: | Diluted sterol ester + Diluted AATG. |
| Condensed Soup: | "Condensed chicken stock soup" manufactured |
| by Ajinomoto CO., Inc. | |

As shown in Table 12, each of Comparative Examples 17∼19 and Example 7, water and condensed soup were weighed and mixed with each other. The resulting mixture was boiled in a pan and kept at 60°C for a sensory evaluation by five taste-panelists. The results are shown in Table 13.

**[Table 12]**

| | | Comparative Example.17 | Comparative Example.18 | Comparative Example. 19 | Example.7 |
|---|---|---|---|---|---|
| Water | | 300g | 300g | 300g | 300g |
| Condensed Soup | | 5.0g | 5.0g | 5.0g | 5.0g |
| Oil | Corn oil I | 0.5g | | | |
| | Diluted AATG | | | 0.5g | 0.5g |
| Diluted sterol ester | | | 0.5g | | 0.5g |

**[Table 13]**

| | Comparative Example. 17 | Comparative Example.18 | Comparative Example. 19 | Example.7 |
|---|---|---|---|---|
| Strength of salty taste | + | +.++ | ++ | +++++ |
| Effect of inhibiting the harshness due to salty taste | - | - | ++ | ++ |

Although a salty taste-enhancing effect was recognized in Comparative Example 18 wherein the sterol ester was added, harshness due to salty taste was observed, too. In other words, there was no difference in texture of the taste between the control and the Comparative Example. An effect of inhibiting the harshness (taste-improving and taste-enhancing effects) was recognized in Comparative Example 19 wherein the ATGG was added in addition to the salty taste-enhancing effect. On the other hand, the salty taste-enhancing effect was more increased in Example 7 than in Comparative Examples 18 and 19, showing a synergistic effect.

### [Experiment 7]

Evaluation with margarine (Effect of the addition of AATG and sterol ester)

| | |
|---|---|
| Comparative Example 20: | Corn oil only (control); |
| Comparative Example 21: | Diluted sterol ester; |
| Comparative Example 22: | Diluted AATG; and |
| Example 8: | Diluted sterol ester + Diluted AATG. |
| Margarine (Fast spread): | "Neo-Soft" manufactured by Snow Brand Milk |
| Products Co.,Ltd | |

As shown in Table 14, each of Comparative Examples 20∼22 and Example 8, and margarine were weighed and mixed with each other. The resulting mixture was subjected to a sensory evaluation by five taste-panelists. The results are shown in Table 15.

**[Table 14]**

| | | Comparative Example.20 | Comparative Example.21 | Comparative Example.22 | Example.8 |
|---|---|---|---|---|---|
| Margarine | | 20.0g | 20.0g | 20.0g | 20.0g |
| Oil | Corn oil | 0.5g | | | |
| | Diluted AATG | | | 0.5g | 0.5g |
| Diluted sterol ester | | | 0.5g | | 0.5g |

**[Table 15]**

| | Comparative Example. 20 | Comparative Example. 21 | Comparative Example. 22 | Example.8 |
|---|---|---|---|---|
| Strength of salty taste | + | + | ++ | ++++ |

Although no salty taste-enhancing effect was recognized in Comparative Example 21 wherein the sterol ester was added, a salty taste-enhancing effect was recognized in Comparative Example 22 wherein the ATGG was added. On the other hand, the salty taste-enhancing effect was more increased in Example 8 than in Comparative Examples 21 and 22, showing a synergistic effect.

### [Experiment 8]

Evaluation with vinegar solution (Effect of the addition of AATG and sterol ester)

| | |
|---|---|
| Comparative Example 23: | Corn oil only (control); |
| Comparative Example 24: | Diluted sterol ester; |
| Comparative Example 25: | Diluted AATG; and |
| Example 9: | Diluted sterol ester + Diluted AATG. |
| Cereal Vinegar: | manufactured by Mizkan Corporation |

As shown in Table 16, each of Comparative Examples 23∼25 and Example 9, water and vinegar were mixed. The resulting mixture was boiled in a pan and kept at 60 °C for a sensory evaluation by five taste-panelists. The results are shown in Table 17.

**[Table 16]**

| | | Comparative Example.23 | Comparative Example.24 | Comparative Example.25 | Example.9 |
|---|---|---|---|---|---|
| Water | | 179.5g | 179.5g | 179.5g | 179g |
| Vinegar | | 20.0g | 20.0g | 20.0g | 20.0g |
| Oil | Corn oil | 0.5g | | | |
| | Diluted AATG | | | 0.5g | 0.5g |
| Diluted sterol ester | | | 0.5g | | 0.5g |

**[Table 17]**

| | Comparative Example 23 | Comparative Example 24 | Comparative Example 25 | Example 9 |
|---|---|---|---|---|
| Effect of inhibiting the harshness due to acid taste | - | - | ++ | ++ |
| Increase in sense of richness | - | - | ++ | +++++ |
| Strength of acid taste | - | - | ++ | +++++ |

No effect of inhibiting harshness due to acid taste (taste-improving and taste-enhancing effects) was recognized in Comparative Example 24 wherein the sterol ester was added. The effect of inhibiting the harshness was recognized in Comparative Example 25 wherein the ATGG was added. A sense of richness and strength of acid taste were also increased in this Comparative Example. In Example 9, the harshness first felt in Comparative Examples 24 and 25 disappeared and acid taste was recognized later than in Comparative Examples 24 and 25. The sense of richness and strength of acid taste were also more increased than in Comparative Examples 24 and 25, showing a synergistic effect.

### [Experiment 9]

Evaluation with tomato sauce (Effect of the addition of AATG and sterol ester)

| | |
|---|---|
| Comparative Example 26: | Corn oil only (control); |
| Comparative Example 27: | Diluted sterol ester; |
| Comparative Example 28: | Diluted AATG; and |
| Example 10: | Diluted sterol ester + Diluted AATG. |
| Tomato Sauce: | manufactured by KAGOME CO., Ltd. |

As shown in Table 18, each of Comparative Examples 26∼28 and Example 10, and tomato sauce were weighed and mixed with each other. The resulting mixture was subjected to a sensory evaluation by five taste-panelists. The results are shown in Table 19.

**[Table 18]**

| | | Comparative Example 26 | Comparative Example 27 | Comparative Example 28 | Example 10 |
|---|---|---|---|---|---|
| Tomato Sauce | | 20.0g | 20.0g | 20.0g | 20.0g |
| Oil | Corn oil | 0.5g | | | |
| | Diluted AATG | | | 0.5g | 0.5g |
| Diluted sterol ester | | | 0.5g | | 0.5g |

**[Table 19]**

| | Comparative Example 26 | Comparative Example 27 | Comparative Example 28 | Example 10 |
|---|---|---|---|---|
| Effect of inhibiting the harshness due to acid taste | - | - | ++ | ++++ |
| Strength of salty taste | + | + | ++ | ++++ |
| Increase in sense of richness | - | - | ++ | ++++ |
| Strength of acid taste | - | - | ++ | +++++ |

No effect of inhibiting harshness due to acid taste (taste-improving and taste-enhancing effects) was recognized in Comparative Example 27 wherein the sterol ester was added. The effect of inhibiting the harshness was recognized in Comparative Example 28 wherein the ATGG was added. A sense of richness and strength of acid taste were also increased in this Comparative Example. In Example 10, the effect of inhibiting harshness, the sense of richness and the strength of acid taste were also more increased than in Comparative Examples 27 and 28, showing a synergistic effect. The same increase was also found in salty taste.

### [Experiment 10]

Evaluation with intermediary enriched sauce (Effect of the addition of AATG and sterol ester)

| | |
|---|---|
| Comparative Example 29: | Corn oil only (control); |
| Comparative Example 30: | Diluted sterol ester; |
| Comparative Example 31: | Diluted AATG; and |
| Example 11: | Diluted sterol ester + Diluted AATG. |
| Intermediary Enriched Sauce: | manufactured by BULL-DOG SAUCE CO.,LTD |

As shown in Table 20, each of Comparative Examples 29∼31 and Example 11, and intermediary enriched sauce were weighed and mixed with each other. The resulting mixture was subjected to a sensory evaluation by five taste-panelists. The results are shown in Table 21.

**[Table 20]**

| | | Comparative Example 29 | Comparative Example 30 | Comparative Example 31 | Example 11 |
|---|---|---|---|---|---|
| Intermediary Enriched Sauce | | 50.0g | 50.0g | 50.0g | 50.0g |
| Oil | Corn oil | 0.5g | | | |
| | Diluted AATG | | | 0.5g | 0.5g |
| Diluted sterol ester | | | 0.5g | | 0.5g |

**[Table 21]**

| | Comparative Example 29 | Comparative Example 30 | Comparative Example 31 | Example 11 |
|---|---|---|---|---|
| Effect of inhibiting the harshness due to acid taste | - | - | ++ | ++++ |
| Strength of salty taste | + | + | ++ | ++++ |
| Increase in sense of richness | - | - | ++ | ++++ |
| Strength of acid taste | - | - | ++ | +++++ |

No effect of inhibiting harshness due to acid taste (taste-improving and taste-enhancing effects) was recognized in Comparative Example 30 wherein the sterol ester was added. The effect of inhibiting the harshness was recognized in Comparative Example 31 wherein the ATGG was added. A sense of richness and strength of acid taste were also increased in this Comparative Example. In Example 11, the effect of inhibiting harshness, the sense of richness and the strength of acid taste were also more increased than in Comparative Examples 30 and 31, showing a synergistic effect. The same increase was also found in salty taste.

### [Experiment 11]

Evaluation with salt solution (Effect of the oxidation of AATG)

| | |
|---|---|
| Comparative Example 32: | Corn oil only (control); |
| Comparative Example 33: | Diluted sterol ester; |
| Comparative Example 34: | Diluted AATG; and |
| Comparative Example 35: | Diluted and oxidized AA; and |
| Example 12: | Diluted sterol ester + Diluted AATG. |
| Example 13: | Diluted sterol ester + Diluted and oxidized AA. |

As shown in Table 22, each of Comparative Examples 32∼35 and Examples 12 and 13, water and common salt were mixed. The resulting mixture was boiled in a pan and kept at 60 °C for a sensory evaluation by five taste-panelists. The results are shown in Table 23.

**[Table 22]**

| | | Comparative Example 32 | Comparative Example 33 | Comparative Example 34 | Comparative Example 35 | Example 12 | Example 13 |
|---|---|---|---|---|---|---|---|
| Water | | 197.9g | 197.9g | 197.9g | 197.9g | 197.4g | 197.4g |
| Salt | | 1.6g | 1.6g | 1.6g | 1.6g | 1.6g | 1.6g |
| Oil | Corn oil | 0.5g | | | | | |
| | Diluted AATG | | | 0.5g | | 0.5g | |
| | Diluted and oxidized AA | | | | 0.5g | | 0.5g |
| Diluted sterol ester | | | 0.5g | | | 0.5g | 0.5g |

**[Table 23]**

| | Comparative Example 32 | Comparative Example 33 | Comparative Example 34 | Comparative Example 35 | Example 12 | Example 13 |
|---|---|---|---|---|---|---|
| Strength of salty taste | + | +.++ | ++ | +++ | +++++ | +++++++ |
| Effect of | - | - | ++ | ++ | ++ | ++ |
| inhibiting the harshness due to salty taste | | | | | | |

Although a salty taste-enhancing effect was recognized in Comparative Example 33 wherein the sterol, harshness due to salty taste was observed, too. In other words, there was no difference in texture of the taste between the control and this Comparative Example. An effect of inhibiting the harshness (taste-improving and taste-enhancing effects) was recognized in Comparative Example 34 wherein the ATGG was added in addition to the salty taste-enhancing effect in addition to the salty taste-enhancing effect. The salty taste-enhancing effect was further increased in Comparative Example 35 wherein the oxidized AA were added.

On the other hand, the salty taste was more increased in Example 12 than in Comparative Examples 33 and 34, showing a synergistic effect. The salty taste was much more increased in Example 13 wherein the sterol ester and the oxidized AA were added, showing a synergistic effect

### [Experiment 12]

Taste-improving effect in body-taste improver and effect of keeping body-taste in reduced body-taste improver

### Evaluation by a sensory test:

In sensory evaluation by a sensory test, the improvement of body taste refers to the increase in "strength of flavor", "strength of taste" and "strength of aftertaste" without any deterioration of "goodness of flavor", "goodness of taste" and "goodness of aftertaste", respectively. The meanings of the symbols for evaluation are as follows:
X: weaker or less preferable than control;
.: the same degree as control;
.: stronger or more preferable than control; and
.: much stronger or much more preferable than control

Phytosterol manufactured by Yashiro Co.,Ltd. having sterol ester content of 92 % (a free sterol concentration of 56 %) was used as sterol ester.

### Effect of sterol as body-taste enhancer

Body-taste improver was prepared by mixing the long-chain highly unsaturated fatty acid and/or the ester thereof, the sterol ester and vegetable oil (corn oil).

**[Table 24]**

| | Body-taste improver |
|---|---|
| Comparative Example 36 | 0.5% AATG/corn oil |
| Comparative Example 37 | 0.25% AATG/corn oil |
| Example 14 | 0.5% AATG.5ppm sterol ester/corn oil |
| Example 15 | 0.5% AATG.50ppm sterol ester/corn oil |
| Example 16 | 0.5% AATG.500ppm sterol ester/corn oil |
| Example 17 | 0.5% AATG.5000ppm sterol ester/corn oil |
| Example 18 | 0.25 %AATG.500ppm sterol ester/corn oil |

**[Table 25]**

| Prepared oil | Comparative Example 36 | Compa rative Example 37 | Example 14 | Example 15 | Example 16 | Example 17 | Example 18 |
|---|---|---|---|---|---|---|---|
| Concentration of sterol ester in oil .ppm. | 0 | 0 | 5 | 50 | 500 | 5000 | 500 |
| Concentration of AA in oil (%. | 0.2 | 0.1 | 0.2 | 0.2 | 0.2 | 0.2 | 0.1 |
| Concentration of AA at eating time .ppm. | 5.8 | 2.9 | 5.8 | 5.8 | 5.8 | 5.8 | 2.9 |
| Concentration of Sterol ester at eating time (ppm. | - | - | 0.01 | 0.14 | 1.35 | 13.5 | 1.35 |
| Strength of flavor | - | × | □ | ○ | ○ | □ | ○ |
| Goodness of flavor | - | × | □ | ○ | □ | □ | ○ |
| Strength of taste | - | × | □ | □ | □ | □ | ○ |
| Goodness of taste | - | × | □ | □ | □ | □ | ○ |
| Strength of aftertaste | - | × | □ | □ | □ | □ | ○ |
| Goodness of aftertaste | - | × | □ | ○ | ○ | ○ | ○ |

As shown by the results in Table 25, comparison between Comparative Example 36 (control containing no sterol ester) and Examples 14∼17 revealed that the addition of sterol ester in such an amount as used in these Examples would enhance the body taste-improving effect even in the case where the concentration of AA was the same as in the soup. It was shown that the body taste-improving effect was reduced in Comparative Example 37 wherein the AA concentration was less than that in Comparative Example 36. It was also found that the body taste-improving effect was not enhanced in Example 14 where the sterol concentration in oil was 5 ppm (0.01 ppm at eating time). Furthermore, Example 18 containing the sterol ester of 500 ppm showed a stronger body taste-improving effect than in Comparative Example 36 although it had only half the AA concentration (0.1 %) of that in Comparative Example 36.

## Claims

1. A taste-improving agent for foods and drinks comprising a long-chain highly unsaturated fatty acid and/or an ester thereof, and a sterol and/or a sterol ester.

2. A taste-improving agent according to Claim 1, wherein the long-chain highly unsaturated fatty acid and/or an ester thereof is subjected to oxidization treatment.

3. A taste-improving agent according to Claim 1 or 2, wherein the long-chain highly unsaturated fatty acid is an n-6 long-chain highly unsaturated fatty acid.

4. A taste-improving agent according to any one of Claims 1 - 3, wherein the long-chain highly unsaturated fatty acid is arachidonic acid.

5. A taste-improving agent according to any one of Claims 1 - 4, wherein the long-chain highly unsaturated fatty acid is derived from microorganism.

6. A method for improving the taste of foods and drinks comprising adding the taste-improving agent according to any one of Claim 1-5 to them.

7. Foods and drinks having an improved taste by the method according to Claim 6.

8. Use of a combination of a long-chain highly unsaturated fatty acid and/or an ester thereof, and a sterol and/or a sterol ester as a taste-improving agent for foods and drinks.
